(19) Europäisches Patentamt
European Patent Office
Office européen des brevets

(11) EP 4 424 792 B1

(12) EUROPEAN PATENT SPECIFICATION

(45) Date of publication and mention of the grant of the patent:
**15.10.2025 Bulletin 2025/42**

(21) Application number: **23159176.9**

(22) Date of filing: **28.02.2023**

(51) International Patent Classification (IPC):
***C09K 5/06*** *(2006.01)*

(52) Cooperative Patent Classification (CPC):
**C09K 5/063**

(54) **PHASE CHANGE MATERIAL COMPOSITION**

PHASENWECHSELMATERIALZUSAMMENSETZUNG

COMPOSITION DE MATÉRIAU À CHANGEMENT DE PHASE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**04.09.2024 Bulletin 2024/36**

(73) Proprietor: **Cowa Thermal Solutions AG**
**6039 Root D4 Luzern (CH)**

(72) Inventors:
- **Studer, Robin**
**8180 Bülach (CH)**
- **O’Neill, Poppy Jayne Patricia Hurst**
**6010 Kriens (CH)**
- **Waser, Remo**
**8038 Zürich (CH)**

(74) Representative: **P&TS SA (AG, Ltd.)**
**Avenue J.-J. Rousseau 4**
**P.O. Box 2848**
**2001 Neuchâtel (CH)**

(56) References cited:
**WO-A1-2014/195691**
**KR-A- 20120 059 074**
**US-B2- 11 560 503**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 424 792 B1

## Description

### Technical domain

The present invention relates to phase change materials, specifically to a phase change material composition comprising additives, which reduce segregation of the composition. The invention also relates to a method for preparing such phase change compositions.

### Related art

Phase change materials (PCM) exhibit a high enthalpy of fusion, with the heat of fusion being generally considerably higher than the sensible heat. Due to their capacity store and release large amount of thermal energy as latent heat during their phase transition PCMs find their use in a wide variety of heating, cooling and thermal energy storage applications, such as conditioning of buildings, medical applications, e.g. heating or cooling of biological samples, human body cooling in bulky clothing, water heating and cooling, heat pump systems, thermal protection of devices, and many others.

To respond to the application-specific thermal requirements, PCMs must have a transition temperature within the operational temperature range of the application and have a good thermal conductivity for efficient heat transfer.

Salt-hydrate PCMs are particularly attractive, as they combine a high volumetric latent heat storage capacity with good thermal conductivity and a sharp melting point. In addition, the materials are readily available at relatively low cost.

However, phase separation, which is also called segregation, is one of the major challenges for the use of salt-hydrate PCMs today. During segregation an insoluble anhydrous precipitate or a precipitate of a different hydrated form having a higher melting point and then the salt-hydrate material is formed. This difference in melting temperatures induces incongruent melting of the PCM. Once the solution has segregated, it loses its phase changing capacity.

Segregation is a particular problem as concentrations of the dissolved salt increase. It is commonly observed in stochiometric salt-water compositions. Since the capacity of a PCM composition to store and transfer heat resides on the salt material and the amount of salt material present in the composition, it is highly desirable to provide salts at high concentrations such as to enhance the efficiency of a PCM composition. Segregation therefore needs to be avoided in concentrated salt compositions.

To overcome this problem, thickeners are conventionally added to increase the viscosity of the material, thereby preventing the unwanted crystals from precipitating and growing by slowing down local concentration differences to build up. An increase in viscosity delays segregation of the PCM. However, it does not prevent segregation entirely. As an undesirable side effect, a higher viscosity results in a loss of enthalpy and a hampered heat transfer.

In recent years, polymers without thickening behaviour have been used to fully prevent the formation of unwanted phases based on a novel mechanistic idea. In this approach, formation of nuclei which are equal to or bigger than the critical nucleus size for crystallization is completely prevented, such as to avoid nucleation of the undesired phase.

WO2014195961A1 for example discloses an application of this approach for a phase change composition comprising sodium acetate trihydrate. The composition contains an alkaline-soluble polymer for inhibition of sodium acetate anhydrous crystal formation and a nucleation promoter.

WO2014/195691 A1 discloses a salt-hydrate phase change material comprising: a) sodium acetate trihydrate or sodium acetate anhydrous; b) one or more suitable alkali soluble polymers; concrete examples are mentioned as "polymer 1" poly(methacrylic acid co-methyl methacrylate), "polymer 2" poly(methacrylic acid, sodium salt, c) one or more suitable nucleation promoters; and d) water.

Polymer-based approaches to prevent non-homogenous crystallization have proven promising and it is therefore of great interest to find further specific polymer containing compositions of salt-hydrate PCMs, which may be tailored to specific applications.

### Short disclosure of the invention

It is an aim of the present invention to provide an aqueous salt-hydrate PCM composition with a reduced risk of incongruent melting behaviour.

The PCM composition should be homogenous. The PCM composition should retain its thermodynamic stability when heated and cooled repeatedly.

It is a further aim of this invention to provide specific polymers which are particularly suited to prevent crystallization of the anhydrous or different hydrated salt component of the salt-hydrate based PCM.

Preferably, the solution to the segregation problem should be capable of being applied to a variety of salt-hydrate PCM compositions, which may be suitable for different applications.

It is yet another aim to provide for an alternative of known salt-hydrate PCM compositions comprising a polymer

for preventing non-homogenous crystallization of the salt-hydrate PCM.

According to the invention, one or more of these aims are attained by the object of the attached claims and in particular by the independent claims. The dependent claims concern further advantageous embodiments of this invention.

Specifically, at least one of the aims above is attained by a phase change material composition, comprising a salt-hydrate phase change material, and one or more polymers, of which at least one polymer has a general formula 1,

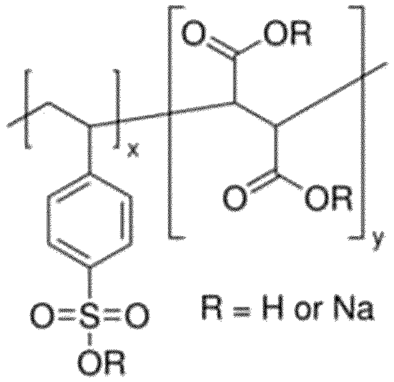

a general formula 2,

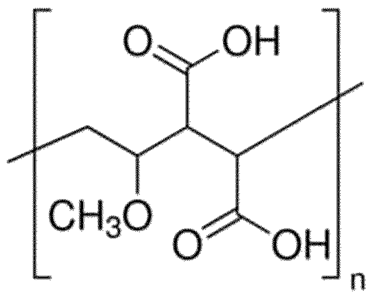

a general formula 3,

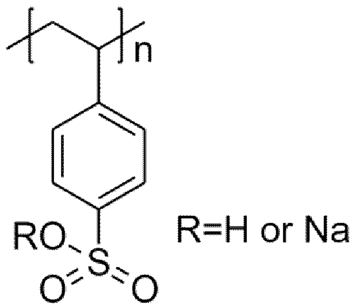

or a mixture of polymers comprising a polymer having a general formula 1, a polymer having a general formula 2 and/or a polymer having a general formula 3. The PCM composition is provided in an aqueous solution.

These polymers reduce or prevent the formation of segregates in different salt hydrate PCM compositions.

The invention is not particularly limited to the type of salt hydrate PCM. The salt hydrate may be selected according to the intended application. The melting point of the selected salt hydrate should be within a suitable range for the intended application. The PCM may be for example be a calcium salt-hydrate, a potassium salt-hydrate, or a sodium salt hydrate.

Sodium acetate trihydrate, $NaOAc \cdot 3H_2O$, also known as SAT, has a melting point at 58°C and is a PCM which is particularly suited and commonly used in building applications, as well as in water heating, cooling, or thermal storage system. The anhydrous form of SAT is known as SA.

Disodium hydrogen phosphate (DSP), $Na_2HPO_4$, in particular its hydrated form disodium hydrogen phosphate dodecahydrate (DSPD), is a promising phase change material due to its melting point at around 35°C, high phase change enthalpy, low costs, safety and high compatibility with metals. Nevertheless, at its stochiometric compositions which

contains approximately 40w% salt, DSPD forms disodium hydrogen phosphate heptahydrate (DSPH) above 35°C resulting in phase segregation. The segregated crystals do not melt at standard cycling conditions. The DSPD PCM material does therefore no longer undergo any phase changing. Once this segregated phase has formed the sample cannot be used as storage material anymore.

The composition of this invention comprises preferably from 20wt% to 80wt%, preferably from 35wt% to 55wt%, for example 45wt%, of the salt component of the PCM. The salt may be provided in its anhydrous form for the preparation of the composition.

The inventors have found that polymers of the general formula 1, of the general formula 2 and of the general formula 3 reduce or prevent the formation of anhydrous salt PCM precipitate or the different hydrated form entirely, thereby avoiding segregation of the salt hydrate PCM solution. The polymers therefore avert the formation or non-homogenous liquid in the aqueous composition, thereby reducing or preventing incongruous melting behavior of the composition.

A polymer having the general formula 1 is a poly(4-styrenesulfonic acid-co-maleic acid), hereinafter referred to as P4SSA-co-MA or P4SSA. The polymer having the general formula 2 is a poly(methyl vinyl ether-alt-maleic acid), hereinafter referred to as PMVEMA. The polymer having the general formula 3 is a polystyrene sulfonic acid or a polystyrene sulfonate, hereinafter referred to as PSS.

Both polymers described herein comprise carboxylate groups, which are commonly thought to interact with the unwanted phase, thereby modifying its crystal shape and increasing its solubility. The unwanted phase does not precipitate, as the anhydrous phase dissolves faster.

P4SSA-co-MA, the polymer having the general formula 1, and PSS, the polymer having the general formula 3, further each comprises a sulfonate group, - $SO_3R$, which actively binds sodium, $Na^+$. It was observed that this polymer is particularly effective in preventing segregation. It is therefore speculated, that this polymer may sequester the sodium of SAT, thereby preventing SA from being formed and precipitating. It is therefore to be expected that this polymer also prevents the formation of anhydrous precipitates or other hydrated forms of other sodium salt hydrates in the same way.

In analogy, functional groups of polymers, such as a sulfonate group, which bind to or interact with cations of salt-hydrate PCMs could be expected to affect a polymer's efficacy in preventing segregation. The inventors therefore suggested that these polymers with these functional groups may be potent additives to avoid segregation and/or incongruous behaviour of salt-hydrate PCMs.

P4SSA-co-MA polymers comprised in a composition of this invention may have an average MW ranging from 50'000 to 100'000, preferably of 70'000 to 80'000, for example 75'000.

PMVEMA polymers comprised in a composition of this invention may have an average MW ranging from 180'000 to 260'000, preferably of 210'000 to 220'000, for example 216'000.

PSS polymers comprised in a composition of this invention may have an average MW ranging from 40'000 to 100'000, preferably 60'000 to 80'000, for example 70'000.

Polymers of this size are particularly suited to prevent segregation of the composition and do not significantly interfere with the phase change behaviour of the PCM.

The composition may comprise additional polymers known in the art, in particular polymers comprising carboxylate groups.

The one or more polymers are provided to the solution at a total amount of 0.5wt% to 10wt%, preferably at 1wt% to 4wt% of the composition. The total amount of polymer in the composition does preferably not exceed 10wt%, since the solution becomes too viscous above this range. The polymers concentration below 0.5wt% is not sufficient to prevent segregation of the PCM composition, while a concentration above 5wt% may cause a reduction in the storage capacity of the PCM mixture.

It may be desirable to adjust the melting point of the PCM composition of this invention in light of a particular application. An adjustment to compensate for the effect that additives may have on the melting point of the composition may also be advantageous. To this end an agent, which modifies the melting point of the PCM may be added to the composition. The agent may decrease the melting point of the PCM.

Preferably the melting point modifying agent should be provided at 0.5wt% to 30wt%, preferably at 2wt% to 10wt% to the composition. Concentrations below 0.5wt% are generally insufficient to cause an adequate modification of the melting point.

In a preferred embodiment the modifying agent is glycine. Glycine is a melting point depressor. It may for example be provided to a PCM composition comprising SAT to render it suitable for applications, which require heating or cooling in a lower temperature range than the inherent 58°C melting point of SAT. By lowering the melting point of SAT, the composition could for example be used for medical applications, or other applications which require thermal regulation at human body temperature.

To avoid supercooling of the liquid phase, nucleation promoters may be added to the composition. Suitable nucleation promoters may be compounds known in the art, such as disodium hydrogen phosphate (DSP) and hydrated forms thereof, sodium hydroxide (NaOH), titanium dioxide ($TiO_2$) and/or tetrasodium pyrophosphate (TSPP) and hydrated forms thereof.

When provided at low concentrations, i.e. from 0.5wt% to 15wt%, to a SAT PCM composition, DSP acts as a nucleation promoter.

DSP is however also a salt, which used in its hydrated form can be used as a PCM, for example when DSP is provided at higher concentrations, for example from 30wt % to 40wt% in an aqueous solution.

It was found as part of this invention, that certain compounds, such as titanium dioxide ($TiO_2$), act as efficient nucleation promoters when added to a PCM composition together with a polymer suitable for reducing or preventing the formation of anhydrous PCM precipitate. TiO2 may be provided as nanoparticles or in any other form. Different forms of TiO2 may be provided in combination.

It was furthermore observed, that particularly good results were achieved by combining positively charged agents, in particular, such as $TiO_2$, with polymers having a negative charge. Without wishing to be bound to any particular theory, it is postulated that the positively charged agents interact with or bind to the negatively charged functional groups of polymers. The polymer may then act as a matrix for the nucleation promoters, thereby support the even distribution of the nanoparticles in the composition and enhancing the agent's capacity to promote nucleation throughout the PCM.

The polymers of formula 1, formula 2 and formula 3 are highly negatively charged and therefore particularly suited to be combined with agents, such as $TiO_2$, to promote a controlled nucleation.

The composition may comprise a combination of different nucleation promoters.

Each nucleation promoter may be independently present at 0.1wt% to 10wt%, preferably at 0.5wt% to less than10 wt% of the composition. The total amount of polymer preferably ranges from 0.5wt% to 10wt%, preferably from 1wt% to 5wt%.

The invention also concerns a process for preparing a salt-hydrate phase change material composition. Comprising at least one of the polymers of formula 1, formula 2, or formula 3.

In a first step, a salt-hydrate phase change material and at least one polymer having the general formula 1, formula 2, and/or having the general formula 3, are mixed in aqueous solution.

The solution is heated above the melting temperature of the PCM material, for example at least 5°C, preferably from 5°C to 25 °C above the melting temperature of the PCM material.

During this process further additives, such as a melting point modifying agent and a nucleation promoter may be mixed into the aqueous PCM solution.

With respect to what is known in the art, the invention provides three specific polymers as efficient and versatile segregation-preventing additives for salt-hydrate PCMs. The invention further identifies groups of polymers which are particularly effective in preventing segregation of salt-hydrate PCMs.

## Short description of the drawings

Exemplar embodiments of the invention are disclosed in the description and illustrated by the figures in which:

**Figure 1A** shows a phase diagram of DSP ($Na_2HPO_4$) and water in which the salt aqueous solution concentration at different temperatures is depicted and the different hydrated forms of DSP are indicated.

**Figure 1B** shows a phase diagram of SAT in which the SA aqueous solution concentration at different temperatures is depicted;

**Figures 2A to 2C** show the specific enthalpy (dh) of a salt-hydrate PCM composition comprising different amounts of polymers, wherein Figure A shows enthalpies of a SAT composition comprising increasing amounts of NaPAA, Figure 2B shows enthalpies of a SAT composition comprising increasing amounts of PMVEMA, and Figure 2C shows enthalpies of a SAT composition comprising increasing amounts of P4SSA-co-MA.

**Figures 3A to 3H** show 3-layer calorimetric measurements of salt-hydrate PCM compositions comprising polymers, wherein the changes in enthalpy in during heating (black bars) and cooling (white bars) are shown in a bar chart (Figures 3B, 3D, 3F, 3H), with the corresponding temperature profiles of the PCM composition during heating (solid line) and cooling (dashed line) shown above the bar charts (Figures 3A, 3C, 3E, 3G);

**Figures 3A and 3B** show the layer calorimetric measurements and specific heat capacity in J/(g K) results for a PCM composition comprising SAT with 3wt% of P4SSA-co-MA,

**Figures 3C and 3D** show the layer calorimetric measurements and specific heat capacity in J/(g K) results for a PCM composition comprising SAT with 2wt% of PMVEMA,

**Figures 3E and 3F** show the layer calorimetric measurements and specific heat capacity in J/(g K) results for a PCM

composition comprising DSP with 1.5wt% of P4SSA-co-MA and 1wt% of $TiO_2$, and

**Figures 3G and 3H** show the layer calorimetric measurements and specific heat capacity in J/(g K) results for a PCM composition comprising DSP with 1.5wt% of P4SSA-co-MA, 1wt% of $TiO_2$, and 2wt% of crosslinked NaPAA.

**Figures 4A and 4B** show heat curves of salt-hydrate PCM compositions subjected to thermal cycling, wherein Figure 4A shows SAT PCM compositions comprising polymers of this invention, and Figure 4B shows DSP PCM compositions comprising polymers according to this invention.

**Figure 5A** shows the crystallisation and segregation behaviour of SAT PCM samples without polymer inhibitor, or with either P4SSA-co-MA or PMVEMA polymer inhibitors.

**Figure 5B** shows the crystallisation and segregation behaviour of DSP PCM samples without polymer inhibitor, or with P4SSA-co-MA, PMVEMA, NaPAA, or PSS polymer inhibitors.

## Examples of embodiments of the present invention

The effect of polymers having the formula1, formula 2, or formula 3 on the segregation and crystallization of selected phase change material (PCM) compounds were tested in a series of experiments.

A PCM according to this invention may for example be disodium hydrogen phosphate (DSP), in particular the dodecahydrate of DSP. For simplicity, the term DSP as used herein means DSP dodecahydrate unless indicated otherwise.

When heated above 35°C in the absence of a segregation inhibitor, DSP forms DSP heptahydrate, which precipitates, resulting in phase segregation.

A phase change diagram for DSP is shown in Figure 1A. The stochiometric composition at about 40wt % $\pm$ 5wt% is indicated by the line SC.

A PCM according to this invention may also be a calcium salt-hydrate, a potassium salt-hydrate, or a sodium salt hydrate, preferably sodium acetate trihydrate (SAT).

A phase change diagram for SAT is shown in Figure 1B. At its stochiometric composition, i.e. when it is provided at 61wt % $\pm$ 3wt% in a PCM composition, SAT forms an anhydrous SA salt above its melting temperature of 58°C. The temperature range susceptible for segregation is marked with a circle in Figure 1B.

Suitable calcium salt-hydrates include also calcium chloride hexahydrate, calcium chloride tetrahydrate, and calcium nitrate tetrahydrate.

Suitable potassium salt-hydrates include dipotassium hydrogen phosphate hexahydrate, and potassium fluoride tetrahydrate.

Suitable sodium salt hydrates include sodium sulphate decahydrate, sodium hydrogen phosphate dodecahydrate, sodium thiosulfate pentahydrate, sodium tetraborate decahydrate and sodium acetate trihydrate.

The PCM may however also be a lithium salt-hydrate, such as lithium chlorate trihydrate, a manganese salt-hydrate such as manganese nitrate hexahydrate, a zinc salt hydrate, such as zinc nitrate hexahydrate, or an iron salt hydrate, such as iron (III) chloride hexahydrate.

The PCM may comprise salt hydrates with similar crystal structure, such as a combination of sodium tetraborate decahydrate and sodium sulphate decahydrate. The mixing of salts with similar crystal structure may assist to reduce or even prevent supercooling behaviour of the PCM.

For the preparation of a salt-hydrate PCM composition, any form of a dissolvable salt-hydrate may be used. Any type of crystal of these salts may be used to prepare the respective PCM solution.

## Experimental Results

### Example 1: Preparation of PCM formulations

Sodium Acetate Trihydrate (SAT) PCM composition

For the preparation of SAT PCM composition 94wt% of Sodium Acetate trihydrate (SAT) (CAS number 6131-90-4) was mixed with poly(4-styrene sulfonic acid-co-maleic acid), hereinafter P4SSA-co-MA or P4SSA, (CAS number 68037-40-1) at 80°C and stirred until a clear solution was formed and no anhydrous crystals were visible.

SAT was provided as the PCM material, DSP as the nucleation promoter and P4SSA-co-MA as inhibitor to prevent the formation of anhydrous SA.

The temperature of the mixture was then reduced to 70°C. In a subsequent step 2.5wt% of Sodium Phosphate

Dibasic (DSP) (CAS number 7558-79-4) was added to the mixture under continued stirring at 70°C until the DPS was homogenously dispersed.

The melting temperature $T_{melt}$ of the obtained PCM composition was 56°C to 58°C, the crystallization temperature $T_{crys}$ was 58°C to 45°C, with a specific enthalpy of dehydration $\Delta H_{dsc}$ of 230 J/g.

To test the resulting phase change material was cooled to room temperature until completely solidified and then cycled between 15°C and 65°C.

Disodium phosphate (DSP) PCM composition

For the preparation of DSP PCM composition 1.42wt% of the polymer compound, P4SSA-co-MA was added to deionized water provided as solvent at 50°C and stirred until fully dissolved. In subsequent steps Titanium oxide ($TiO_2$) (CAS number 1317-80-2) (0.95wt%), NaOH (CAS number 1310-73-2) (0.95wt%), and DSP (34.12wt%) were added to the mixture. The mixture was stirred thoroughly throughout the procedure, allowing for each of the added components to disperse homogenously in the aqueous solution before adding the next component. In a further step cross-linked sodium polyacrylate (crosslinked NaPAA) (CAS number 9003-04-7) (1.90wt%) was added to the mixture, which was then stirred for approximately 2 hours to result in the phase change product PCM35.

Titanium Oxide, $TiO_2$, and Sodium Hydroxide were provided as nucleators of the DSP salt. P4SSA-co-MA was provided as inhibitor to prevent the formation of anhydrous salt.

$TiO_2$ was identified as part of this study to be the most promising nucleator for DSP PCM, alone or in combination with a cross-linked polymer, for example crosslinked NaPAA.

The melting temperature $T_{melt}$ of the obtained PCM composition was 56°C to 58°C, the crystallization temperature $T_{crys}$ was 58°C to 45°C, with a specific enthalpy of dehydration $\Delta H_{dsc}$ of 230 J/g.

It was observed that certain nucleators, in particular $TiO_2$, provided to the DSP composition had the tendency to form aggregates. Aggregation could be reduced or completely avoided by adding crosslinked NaPAA as a gelling agent to the DSP PCM composition.

Without wishing to be bound by any specific theory, it is assumed that cross-linked polymers, in particular cross-linked NaPAA, increase porosity of the DSP PCM composition. It is thought that the crosslinked polymer provides a pocketed structure, which facilitates the dispersion and suspension of the nucleating agent suspension.

It is known that NaPAA itself can prevent or reduce segregation of some PCMs, for example SAT. However, NaPAA does not inhibit segregation of DSP PCM composition as was confirmed in segregations experiments performed without additional inhibitory polymer (see Figure 5B).

DSP PCM compositions comprising PMVEMA or NaPAA as segregation inhibitory polymer were prepared according to the same procedure. When NaPAA was provided to test its capacity to prevent segregation in a DSP PCM composition, no other polymer was added.

To test the resulting phase change material was then cooled to room temperature. The product was tested in temperature cycles between 20°C and 50°C.

**Example 2: Polymer content and heat storage capacity - DSC calorimetry**

The enthalpy-temperature relation determines the heat storage capacity of a PCM. This relation can be determined experimentally using calorimetric methods. A high enthalpy indicates a good latent heat storage capacity of the PCM.

Differential scanning calorimetry (DSC) assays were performed on the polymers of formula 1, formula 2 and formula 3, as well as on previously described polymers used to prevent segregation of PCMs.

DSC is a widely used method in thermal analysis. Using the DSC, the melting temperatures and the enthalpies associated with such transformations can be determined precisely. The specific heat capacity of a given material can also be measured. These properties are critical when characterizing PCMs for thermal energy storage applications.

Phase transitions are always associated with a change in phase change enthalpy and the working principle of DSC-analysis is based on the determination of this enthalpy. In order to test the PCM compositions comprising different polymers for their thermal characteristics, including their melting temperatures and enthalpies of fusion, the samples are subjected to thermal testing in the DSC.

The working principle of the DSC is that the sample is inserted into the DSC alongside a thermally inert reference substance, for example Quartz, and both samples are subjected to a time-linear temperature program, where both increases and decreases in the temperature are permittable. The DSC3+ calorimeter (Mettler Toledo, Columbus, OH, USA), which according to the manufacturer has an uncertainty in enthalpy of $\pm$ 8%, was used for all experiments of this study. In the experiments performed in this study 5-20 $\pm$ 0.0005 mg of each sample was provided for DSC measurements. Both, the reference sample and the sample to be tested, were subjected to the same thermal profile inside a heating and cooling chamber.

The samples were measured using two oppositely-switched thermocouples, one inserted into the sample to be tested and the other one inserted into the thermally inert reference. The resulting thermo-electric voltage is proportional to the heat flow of the sample.

The change in enthalpy of the tested sample was determined based on the temperature difference between the tested sample and the thermally inert reference sample using the following energy balance equation:

$$\frac{dq}{dt} = \frac{1}{R}\left(\sum_{i=1}^{N}(\Delta T_{S0})_i - \sum_{i=1}^{N}(\Delta T_{R0})_i\right)$$

The phase change enthalpy was determined by integration of the heat flow over a defined period of time, wherein the material was heated at a rate of 2 K $min^{-1}$.

The results of these experiments are summarised in the diagrams shown in Figures 2A to 2C, where changes in enthalpy (J /g) of the PCM SAT provided with increasing amounts the inhibitor polymers NaPAA, PMVEMA, or P4SSA-co-MA were determined.

NaPAA is known to act as a segregation inhibitor when added to SAT PCM compositions. This polymer was included as a positive control in the thermal cycling experiments performed with SAT PCM compositions.

The diagram shown in Figure 2A presents sample enthalpies as determined from DSC data collected for SAT samples prepared with NaPAA polymer added at 0.5-3 wt.%. The enthalpy of the SAT and polymer composition did not significantly decrease when a higher percentage of polymer was provided.

Similar results were obtained when increasing amounts of PMVEMA (shown in Figure 2B) or of P4SSA-co-MA (shown in Figure 2C) were added to the SAT sample. In the measured range a higher weight percentage of PMVEMA or P4SSA-coMA polymer did not significantly affect the enthalpy of the PCM sample composition.

The results confirm that the excellent heat storage properties of the SAT PCM sample were not altered by the addition of increasing amounts of the tested polymer inhibitors.

**Example 3: PCM material and heat storage capacity - 3-layer calorimetry**

Measurement devices for determining the heat storage capacity of PCMs are usually based on small sample sizes, typically between 5μg and 10μg, which can be inaccurate when the sample has either a low thermal conductivity, a high thermal capacity over a small temperature range, or is inhomogeneous.

The 3-layer calorimetric method, which is well known in the art, addresses this issue and permits accurate measurement of larger sampling sizes. As an additional advantage, 3-layer calorimetry is a non-intrusive measurement methodology, permitting for subsequent use of the measured samples in further tests. It was therefore chosen as the appropriate method to determine heat capacity of different salt hydrate PCM compositions with or without segregation inhibiting polymers. The calorimeter was calibrated using substances with known enthalpy distributions.

To determine the heat storage capacity, the required temperature profile corresponding to the sample PCM composition was programmed into a standard climatic test cabinet inside of which a commercial 3-layer calorimeter measuring device (w&a Wärme und Anwendungstechnische Prüfungen) was positioned. SAT PCM compositions were cycled between 35°C and 65°C, DSP A heating rate of 0.3 $Kmin^{-1}$ was applied to the samples, which were provided at 100 g each. This large quantity of the sample reduced the impact of weighing tolerance deviations and permitted the correct measurement for salt hydrate PCMs which contain polymers and nucleating agents.

The results of these measurements are summarised in Figures 3A to 3H.

The temperature of the cycled sample is shown as a solid line in Figures 3A, 3C, 3E and 3C, the temperature of the surrounding heating medium is shown as a dashed line in these Figures.

Changes in enthalpy (dH) of the sample during heating of the sample are shown as black bars in Figures 3B, 3D, 3F and 3H. Changes in enthalpy (dH) during cooling of the sample are shown as white bars in these Figures.

SAT PCM compositions shown in Figures 3A to 3D were cycled from 40°C and 65°C. DSP compositions shown in Figures 3E to 3H were cycled from 22°C and 48°C.

The calorimetric results of a PCM composition consisting of 95.5wt% SAT, 3wt% P4SSA-co-MA and 1.5wt% DSP are shown in Figures 3A and 3B. As shown in Figure 3A, the SAT PCM composition comprising P4SSA-co-MA melted at around 58°C, indicated by the long temperature plateau of the thermal sample curve. The sample was heated further to ensure that all the SAT crystals were melted before the composition was cooled down. The sharp drop in temperature indicates a supercooling of the solution, which is followed by a temperature rise to the crystallization temperature. The proximity of melting temperature and crystallization temperature is indicative of a highly efficient PCM behaviour. The efficiency in re-crystallization is at least in part due to the absence of segregated material in the sample.

This is furthermore confirmed by the enthalpy curves during heating and cooling of the composition. The

respective enthalpy peaks during heating and cooling are within 2°C from each other, indicating heat storage and release within this narrow temperature range.

The same experiment was performed for a PCM composition consisting of 96.5wt% SAT, 2wt% PMVEMA, and 1.5wt% DSP. The results of this experiment are shown in Figures 3C and 3D.

As can be seen in the graphs shown in this Figures, the SAT PMVEMA composition also demonstrated a very good PCM behaviour, even though the difference in temperature between the peaks of the enthalpy curves was slightly larger.

Figures 3E to 3H show the corresponding results for DSP PCM composition. In these experiments the DSP PCM was dissolved at high temperatures. The heated composition was first cooled and subsequently heated to melt the DSP PCM.

DSP was provided at 38wt% together with 1.5wt% P4SSA-co-MA and 1wt% of $TiO_2$ in water in experiments presented in Figures 3E and 3F.

When the composition was cooled from approximately 42°C to 15°C, a supercooling effect was observed, indicated by the sharp drop in sample temperature, which was followed by a temperature increase to the crystallisation temperature of the DSP between 30°C and 35°C. Two distinct peaks in sample temperature were observed. DSP is a dimorph and each peak is presumed to correspond to one of the two forms of DSP. The polymorphic transition of DSP in this composition is marked by an intermediate temperature drop in the crystallisation plateau of the curve.

Following its crystallization, the DSP PCM cooled down to 15°C and was then exposed to 41°C. The temperature of the sample rose consistently and flattened out at its melting temperature, which was in the same range as its crystallization temperature. Sample enthalpy during heating and cooling clearly overlapped, as seen in Figure 3F, indicating low segregation and the suitability of this composition for PCM applications.

Figures 3G and 3H show the heat storage results for a DSP PCM composition comprising 38wt% DSP, 1.5wt% P4SSA-co-MA, 1wt% of $TiO_2$ as a first nucleation promoter and 2wt% of crosslinked NaPAA as a gelling agent to prevent aggregation of the nucleation promoter. The components were mixed in water as sole solvent.

The observed behaviour of this composition was very similar to the results obtained for the DSP PCM composition shown in Figures 3E and 3F. The addition of a low percentage of crosslinked NaPAA smoothed out the polymorph transition resulting in a flat crystallization plateau.

**Example 4: Repeated thermal cycling**

To test the durability of the PCM compositions, different compositions were submitted to repeated thermal cycles in the thermal cycling set-up.

The samples were subjected to repeated heating and cooling of the surrounding water and the temperature of the PCM compositions was continuously measured throughout these cycles. The results of these experiments are shown in Figures 4A and 4B.

Figure 4A shows temperature curves of SAT PCM samples provided with 3wt% P4SSA-co-MA, and with 3wt% PMVEMA. The samples were cycled between 25°C and 65°C. The shoulder on the left side of each temperature cycle corresponds to a melting plateau, i.e. a relatively constant sample temperature during which the PCM sample absorbs heat energy and melts. The shoulder on the right hand side of each temperature cycle corresponds to the crystallization plateau, i.e. a relatively constant sample temperature during which the PCM sample releases heat energy and crystallizes.

Figure 4A shows the influence of polymer on the melting plateau length, which corresponds to the enthalpy. Sample with P4SSA shows a longer melting plateau and subsequently a higher melting enthalpy than the PMVEMA.

Figure 4B shows temperature curves of DSP PCM samples comprising either 2wt% of P4SSA-co-MA or 2wt% of PSS. The samples were cycled between 20°C and 50°C. The temperature curves for these compositions were very consistent throughout the cycles.

**Example 5: Segregation behaviour**

For visual tests of crystallization and segregation behaviour the PCM compositions, the samples were filled into a transparent container of temperature conductive material, a Falcon tube. The containers were placed in a water bath, such that the PCM composition contained in the Falcon tube was fully submerged in the water. The temperature of the water contained in the water bath was thermally cycled with a hydraulically connected thermostat. The PCM temperature in the middle of the samples was recorded by means of thermocouples.

The segregation behaviour of the tested PCM samples was assessed after one heating/cooling cycle, whereby SAT PCM compositions were cycled between 25°C and 65°C and DSP PCM compositions were cycled between 20°C and 50°C.

Figure 5A shows containers with SAT PCM without polymer, with 2wt% of either P4SSA-co-MA or with 2 of PVMEMA. All of the PCM samples further comprised 2wt% of DSP to support the nucleation of the PCM material.

The pristine SAT sample, which did not contain any polymer, was liquid at 60°C and did not solidify at 15°C, due to segregation of SA, which was visible as fine precipitate in the sample, indicated with an arrow.

The SAT samples comprising either P4SSA-co-MA or PMVEMA were liquid at 60°C and solid at 15°C. No segregation was detected in these samples.

Figure 5B shows segregation behaviour of DSP PCM samples with or without segregation inhibiting polymers, which were each provided at 2wt% to the respective sample. The polymers P4SSA-co-MA, PMVEMA, NaPAA and PSS were tested. The samples did not contain nucleation promoters.

The images show samples cooled down to 15°C after 1 heating/cooling cycle.

Segregated DSP material was clearly visible in the DSP composition without any polymer, as well as in the DSP composition comprising NaPAA as inhibitory polymer. The segregated material is marked with an arrow and clearly visible in the solution.

This result demonstrates that NaPAA does not act as a segregation inhibitor in DSP PCM compositions. This further supports the hypothesis, that NaPAA acts as gelling agent to prevent aggregation of nucleation promoters in DSP PCM composition, and not as a segregation inhibitor itself when added to a DSP-PCM composition. This is different from SAT PCM compositions in which it is known to act as a segregation inhibitor.

In contrast, the DSP samples comprising either P4SSA-co-MA, PMVEMA, or PSS did not contain any segregated material at 15°C. The samples were liquid at this temperature, since the experiments were performed without crystallisation inducing nucleation promoters.

Remarkably, the DSP PCM sample comprising P4SSA-co-MA did not segregate after 40 temperature cycles. For the DSP PCM sample comprising PSS no segregation was detected after 25 cycles. However, when the polymer was omitted, the DSP mixture segregated after 4 or 5 cycles.

These results show that the claimed polymers of formula 1, formula 2 and of formula 3 are potent segregation inhibitors of a variety of PCMs. The inhibitors proved to provide excellent thermodynamic stability to the PCM compositions over many temperature cycles, preventing segregation of salt-hydrate PCMs and enabling crystallization and solidification of the PCM. The PCM compositions of this invention therefore are highly efficient and perfectly suited for heat storage applications. The compositions maintain their efficacy over time and during repeated applications.

## Claims

**1.** A phase change material composition, comprising

- a salt-hydrate phase change material component,
- one or more polymers, of which at least one polymer has

a general formula 1

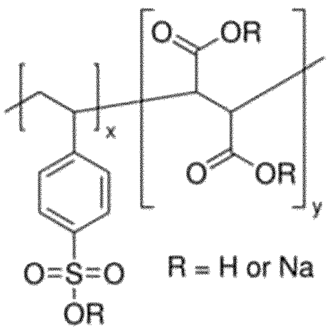

wherein R is either hydrogen or sodium,
or a general formula 2

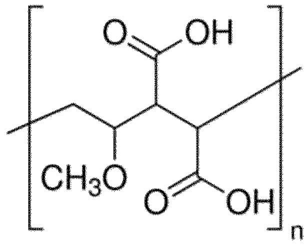

or a general formula 3

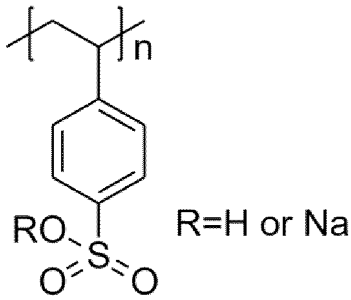

wherein R is either hydrogen or sodium,
or a mixture of polymers comprising a polymer having a general formula 1, a polymer having a general formula 2 and/or a polymer having a general formula 3, and

- water.

2. The composition of claim 1, wherein the phase change material is

- a calcium salt-hydrate, a potassium salt-hydrate, or a sodium salt hydrate, preferably sodium acetate trihydrate, or
- a disodium hydrogen phosphate (DSP), preferably a disodium hydrogen phosphate dodecahydrate.

3. The composition of claim 1 or 2, wherein the salt-hydrate phase change material component is present at a level from 20wt% to 80wt%, preferably from 35wt% to 55wt% in the composition.

4. The composition of any of claims 1 to 3, wherein the total amount of polymer is present at 0.5wt% to 10wt%, preferably 1wt% to 4wt%.

5. The composition of any of claims 1 to 4, further comprising an agent for modifying the melting point of the phase change material, which is preferably present at 0.5wt% to 30wt %, preferably 2wt% to 10wt%.

6. The composition of claim 5, said agent being glycine.

7. The composition of any of claims 1 to 6, further comprising one or more suitable nucleation promoters.

8. The composition of claim 7, wherein one or more suitable nucleation promoters are independently selected from disodium hydrogen phosphate (DSP) and hydrated forms thereof, tetrasodium pyrophosphate (TSPP) and hydrated forms thereof, and mixtures thereof.

9. The composition of claims 7 or 8, wherein at least one of the one or more nucleation promoters, such as $TiO_2$, is at least partially be provided as a nanoparticle.

10. The composition of any of claims 7 to 9, wherein each nucleation promoter is independently present at 0.5wt% to 10wt%, preferably 1wt% to 5wt% of the composition.

11. Use of a polymer of general formula 1, of the general formula 2, or of the general formula 3 to prevent non-homogenous

liquid formation in a salt-hydrate phase change composition.

**12.** A process for preparing a salt-hydrate phase change material composition, comprising mixing an aqueous solution comprising a phase change material and at least one polymer having the general formula 1, having the general formula 2, and/or having the formula 3 while heating the mixture to at least 80°C, preferably to at least 20°C above the melting temperature of the phase change material.

**13.** The process of claim 12, wherein at least one nucleation promoter, preferably provided such that the composition comprises 0.5wt % to 10wt% of total amount of nucleation promoter, or at least one melting temperature modifying agent, preferably provided such that the composition comprises 0.5wt % to 30wt% of total amount of melting temperature modifying agent, or at least one nucleation promoter and at least one melting temperature modifying agent are added to the mixture.

**14.** The process of claim 12 or 13, wherein the salt-hydrate material is provided at 20wt% to 80wt%, preferably from 35wt% to 55wt%, for example 45wt%, and wherein the total amount of polymer is provided from 0.5wt% in an aqueous solution.

**15.** A device for heat storage or heat transfer comprising the composition of any of claims 1 to 10, or a composition obtainable by the process of any of claims 12 to 14.

**Patentansprüche**

**1.** Zusammensetzung eines Phasenwechselmaterials, umfassend

- eine Salz-Hydrat-Phasenwechselmaterial Komponente,
- ein oder mehrere Polymere, von denen mindestens ein Polymer einen

eine allgemeine Formel 1

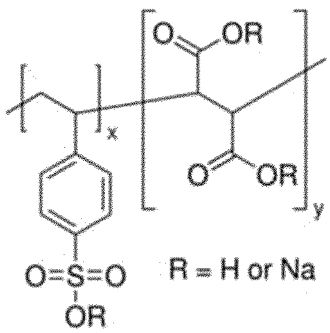

wobei R entweder Wasserstoff oder Natrium ist,
oder eine allgemeine Formel 2

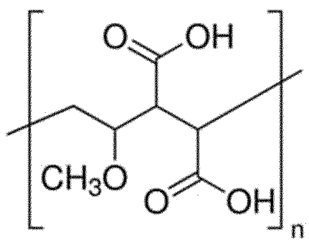

oder eine allgemeine Formel 3

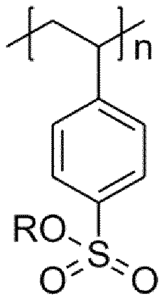

R=H or Na

wobei R entweder Wasserstoff oder Natrium ist,
oder eine Mischung von Polymeren, die ein Polymer mit der allgemeinen Formel 1, ein Polymer mit der allgemeinen Formel 2 und/oder ein Polymer mit der allgemeinen Formel 3 umfasst, und

- Wasser.

**2.** Die Zusammensetzung nach Anspruch 1, wobei das Phasenwechselmaterial Folgendes ist:

- ein Calciumsalz-Hydrat, ein Kaliumsalz-Hydrat oder ein Natriumsalz-Hydrat, vorzugsweise Natriumacetat-Trihydrat, oder
- Dinatriumhydrogenphosphat (DSP), vorzugsweise Dinatriumhydrogenphosphat-Dodecahydrat

**3.** Die Zusammensetzung nach Anspruch 1 oder 2, wobei die Salz-Hydrat-Phasenwechselmaterial Komponente in einer Konzentration von 20 bis 80 Gew.-%, vorzugsweise von 35 bis 55 Gew.-% der Zusammensetzung vorliegt.

**4.** Die Zusammensetzung nach einem der Ansprüche 1 bis 3, wobei die Gesamtmenge des Polymers 0,5 Gew.-% bis 10 Gew.-%, vorzugsweise 1 Gew.-% bis 4 Gew.-% beträgt.

**5.** Die Zusammensetzung nach einem der Ansprüche 1 bis 4, die ferner ein Mittel zur Modifizierung des Schmelzpunkts des Phasenwechselmaterials enthält, das vorzugsweise in einer Konzentration von 0,5 Gew.-% bis 30 Gew.-%, vorzugsweise 2 Gew.-% bis 10 Gew.-%, vorliegt.

**6.** Die Zusammensetzung nach Anspruch 5, wobei das Mittel zur Modifizierung des Schmelzpunkts des Phasenwechselmaterials Glycin ist.

**7.** Die Zusammensetzung nach einem der Ansprüche 1 bis 6, die außerdem einen oder mehrere geeignete Keimbildungspromotoren enthält.

**8.** Die Zusammensetzung nach Anspruch 7, wobei ein oder mehrere geeignete Keimbildungspromotoren unabhängig voneinander ausgewählt sind aus Dinatriumhydrogenphosphat (DSP) und hydratisierten Formen davon, Tetranatriumpyrophosphat (TSPP) und hydratisierten Formen davon, sowie Mischungen davon.

**9.** Die Zusammensetzung nach Anspruch 7 oder 8, wobei mindestens einer der ein oder mehreren Keimbildungspromotoren, wie zum Beispiel $TiO_2$, zumindest teilweise in Form von Nanopartikeln vorliegt.

**10.** Die Zusammensetzung nach einem der Ansprüche 7 bis 9, wobei die Keimbildungspromotoren unabhängig voneinander jeweils in einer Konzentration von 0,5 Gew.-% bis 10 Gew.-%, vorzugsweise 1 Gew.-% bis 5 Gew.-%, in der Zusammensetzung vorliegen.

**11.** Verwendung eines Polymers der allgemeinen Formel 1, der allgemeinen Formel 2 oder der allgemeinen Formel 3 zur Verhinderung der Bildung einer inhomogenen Flüssigkeit in einer Salz-Hydrat-Phasenwechselzusammensetzung.

**12.** Ein Verfahren zur Herstellung einer Salz-Hydrat-Phasenwechselmaterial-Zusammensetzung, umfassend das Mischen einer wäßrigen Lösung, die ein Phasenwechselmaterial und mindestens ein Polymer mit der allgemeinen Formel 1, mit der allgemeinen Formel 2 und/oder mit der Formel 3 umfaßt, während das Gemisch auf mindestens 80°C, vorzugsweise auf mindestens 20°C über der Schmelztemperatur des Phasenwechselmaterials erhitzt wird.

**13.** Das Verfahren nach Anspruch 12, wobei der Mischung mindestens ein Keimbildungspromotor, der vorzugsweise so bereitgestellt wird, dass die Zusammensetzung 0,5 Gew.-% bis 10 Gew.-% des Keimbildungspromotors umfasst, oder mindestens ein die Schmelztemperatur modifizierendes Mittel, das vorzugsweise so bereitgestellt wird, dass die Zusammensetzung 0,5 Gew.-% bis 30 Gew.-% des die Schmelztemperatur modifizierenden Mittels umfasst, oder mindestens ein Keimbildungspromotor und mindestens ein die Schmelztemperatur modifizierendes Mittel zugesetzt werden.

**14.** Das Verfahren nach Anspruch 12 oder 13, wobei das Salz-Hydrat-Material in einer Konzentration von 20 Gew.-% bis 80 Gew.-%, vorzugsweise von 35 Gew.-% bis 55 Gew.-%, beispielsweise 45 Gew.-%, und wobei eine Gesamtkonzentration des Polymers von mindestens 0,5 Gew.-% in einer wässrigen Lösung bereitgestellt werden.

**15.** Vorrichtung zur Wärmespeicherung oder Wärmeübertragung, umfassend die Zusammensetzung nach einem der Ansprüche 1 bis 10 oder eine Zusammensetzung, die durch das Verfahren nach einem der Ansprüche 12 bis 14 erhältlich ist.

## Revendications

**1.** Une composition de matériau à changement de phase, comprenant

- un composant de matériau à changement de phase sel-hydrate,
- un ou plusieurs polymères, dont au moins un polymère a

une formule générale 1

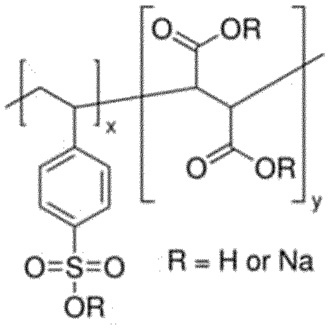

dans laquelle R est soit de l'hydrogène, soit du sodium,
ou une formule générale 2

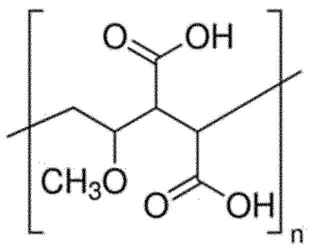

ou une formule générale 3

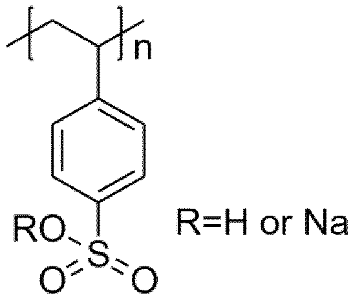

dans laquelle R est soit de l'hydrogène, soit du sodium,
ou un mélange de polymères comprenant un polymère de formule générale 1, un polymère de formule générale 2 et/ou un polymère de formule générale 3, et

- l'eau.

**2.** La composition de la revendication 1, dans laquelle le matériau à changement de phase est

- un sel de calcium hydraté, un sel de potassium hydraté ou un sel de sodium hydraté, de préférence l'acétate de sodium trihydraté, ou
- un hydrogénophosphate disodique (DSP), de préférence un hydrogénophosphate disodique dodécahydraté.

**3.** La composition de la revendication 1 ou 2, dans laquelle le composant de matériau à changement de phase sel-hydrate est présent à une concentration compris entre 20 et 80 % en poids, de préférence entre 35 et 55 % en poids de la composition.

**4.** La composition de l'une des revendications 1 à 3, dans laquelle la quantité totale de polymère est présente à 0,5 à 10 % en poids, de préférence de 1 à 4 % en poids.

**5.** La composition de l'une des revendications 1 à 4, comprenant en outre un agent de modification du point de fusion du matériau à changement de phase, qui est de préférence présent à une concentration de 0,5 % en poids à 30 % en poids, de préférence à une concentration de 2 % en poids à 10 % en poids.

**6.** La composition de la revendication 5, ledit agent étant la glycine.

**7.** La composition de l'une des revendications 1 à 6, comprenant en outre un ou plusieurs promoteurs de nucléation appropriés.

**8.** La composition selon la revendication 7, dans laquelle un ou plusieurs promoteurs de nucléation appropriés sont choisis indépendamment parmi l'hydrogénophosphate disodique (DSP) et ses formes hydratées, le pyrophosphate tétrasodique (TSPP) et ses formes hydratées, et leurs mélanges.

**9.** La composition des revendications 7 ou 8, dans laquelle au moins un des promoteurs de nucléation, tel que le $TiO_2$, qui est au moins partiellement fourni sous forme de nanoparticules.

**10.** La composition de l'une des revendications 7 à 9, dans laquelle chaque promoteur de nucléation est présent indépendamment à une concentration de 0,5 à 10 % en poids, de préférence de 1 à 5 % en poids de la composition.

**11.** Utilisation d'un polymère de formule générale 1, de formule générale 2 ou de formule générale 3 pour empêcher la formation d'un liquide non homogène dans une composition à changement de phase sel-hydrate.

**12.** Un procédé de préparation d'une composition de matériau à changement de phase sel-hydrate, consistant à mélanger une solution aqueuse comprenant un matériau à changement de phase et au moins un polymère répondant à la formule générale 1, à la formule générale 2 et/ou à la formule 3, tout en chauffant le mélange à au moins 80°C, de préférence à au moins 20°C au-dessus de la température de fusion du matériau à changement de phase.

**13.** Le procédé de la revendication 12, dans lequel au moins un promoteur de nucléation, de préférence fourni de telle

sorte que la composition comprend 0,5 % en poids à 10 % en poids de la quantité totale de promoteur de nucléation, ou au moins un agent modificateur de la température de fusion, de préférence fourni de telle sorte que la composition comprend 0,5 % en poids à 30 % en poids de la quantité totale d'agent modificateur de la température de fusion, ou au moins un promoteur de nucléation et au moins un agent modificateur de la température de fusion, sont ajoutés au mélange.

**14.** Le procédé de la revendication 12 ou 13, dans lequel le matériau sel-hydrate est fourni à une concentrations de 20 à 80 % en poids, de préférence de 35 à 55 % en poids, par exemple 45 % en poids, et dans lequel la quantité totale de polymère est fournie une concentration d'au moins 0,5 % en poids dans une solution aqueuse.

**15.** Un dispositif de stockage de chaleur ou de transfert de chaleur comprenant la composition de l'une des revendications 1 à 10, ou une composition obtenue par le procédé de l'une des revendications 12 à 14.

Fig. 1A

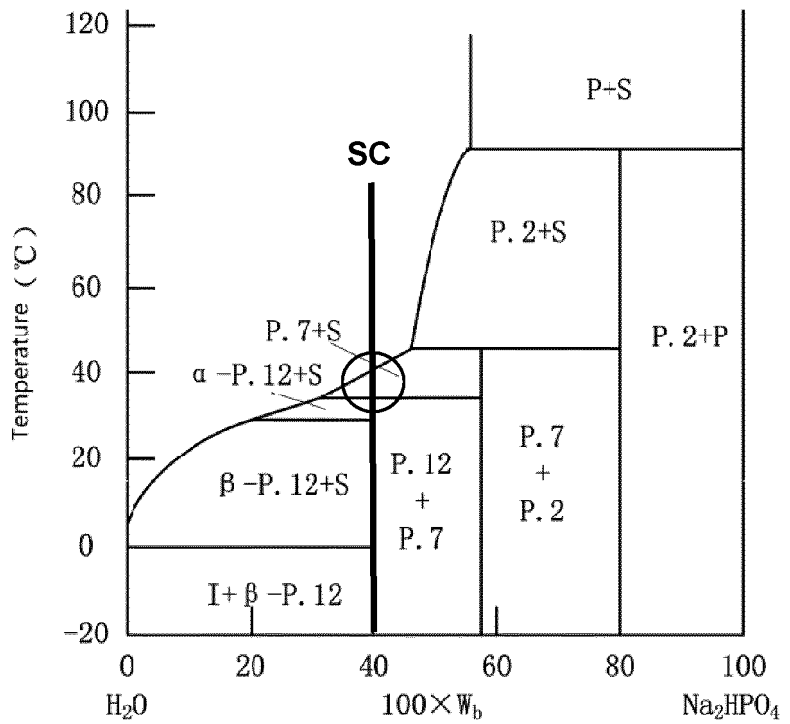


I=Ice, P=$Na_2HPO_4$, P. 2=$Na_2HPO_4 \cdot 2H_2O$, P. 7=$Na_2HPO_4 \cdot 7H_2O$, P. 12=$Na_2HPO_4 \cdot 12H_2O$, S=solution

Fig. 1B

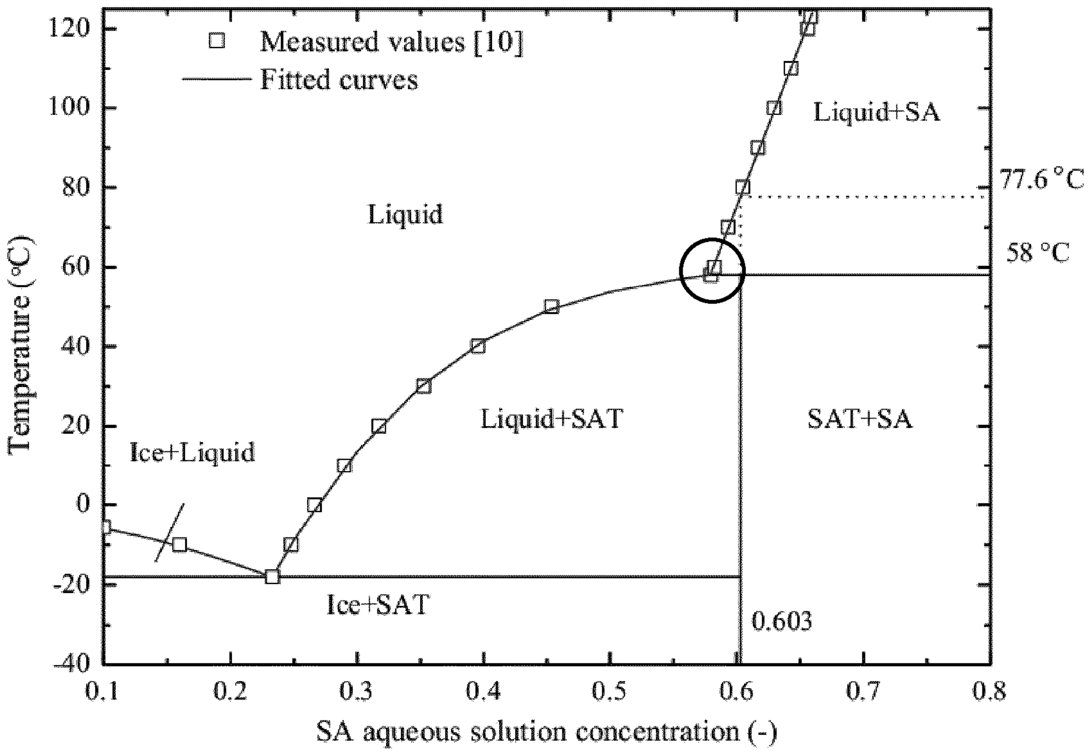
Measured values [10]
Fitted curves
Liquid
Liquid+SA
77.6 °C
58 °C
Liquid+SAT
SAT+SA
Ice+Liquid
Ice+SAT
0.603
Temperature (°C)
SA aqueous solution concentration (-)

Fig. 2A

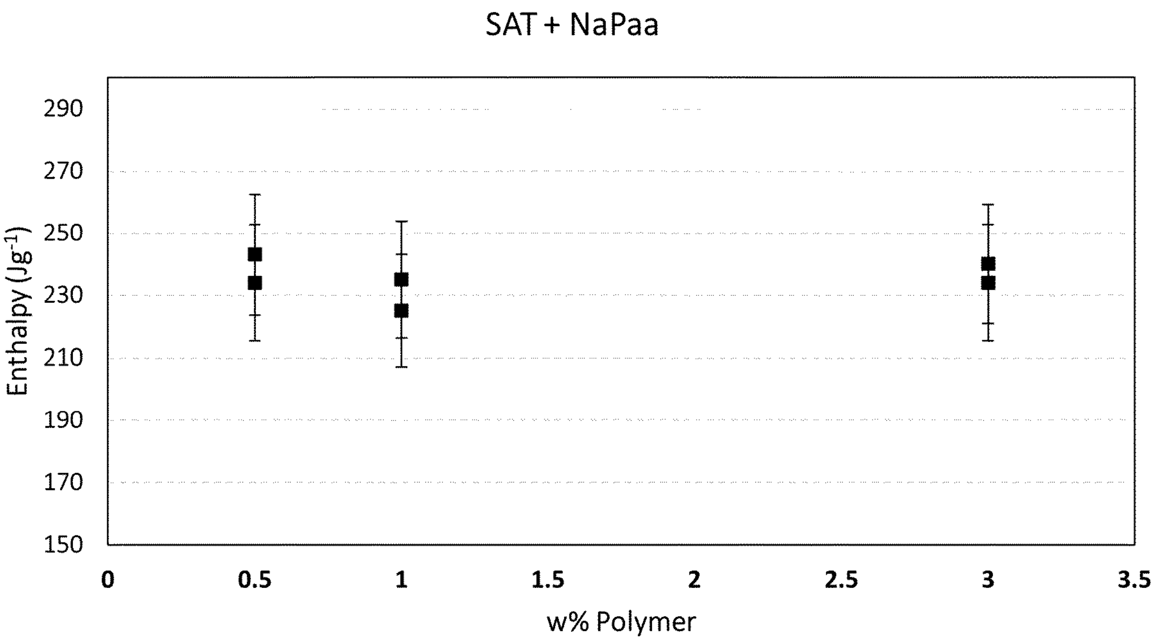
SAT + NaPaa
Enthalpy (Jg-1)
w% Polymer

Fig 2B

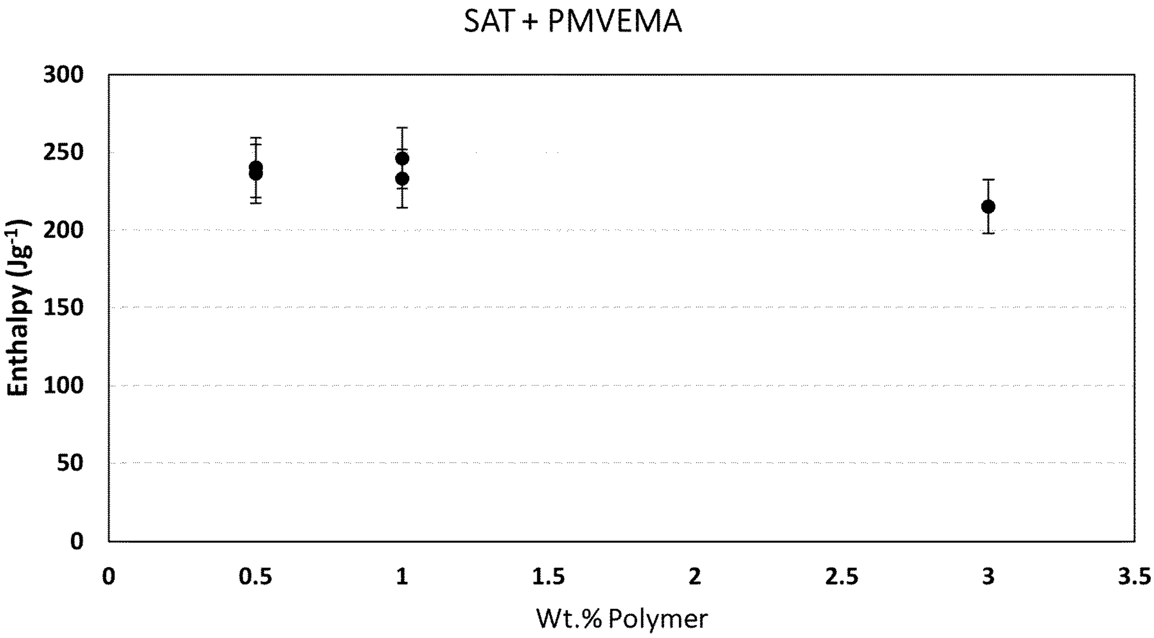
SAT + PMVEMA
300
250
200
150
100
50
0
Enthalpy (Jg-1)
0
0.5
1
1.5
2
2.5
3
3.5
Wt.% Polymer

Fig. 2C

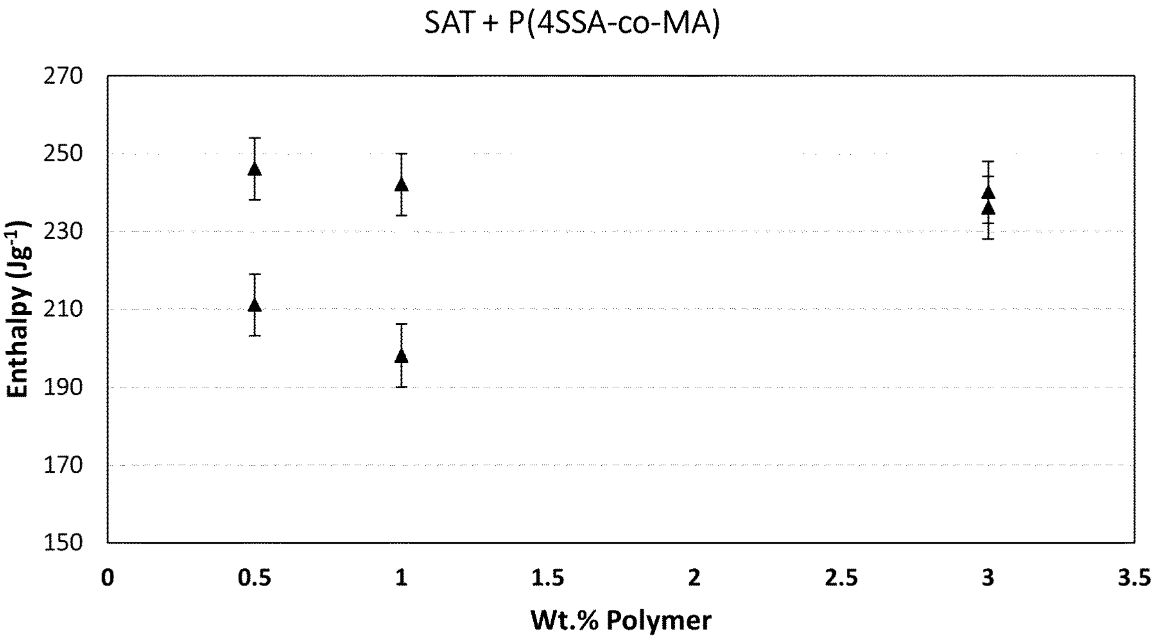
SAT + P(4SSA-co-MA)
270
250
230
210
190
170
150
Enthalpy (Jg-1)
0
0.5
1
1.5
2
2.5
3
3.5
Wt.% Polymer

Fig. 3A

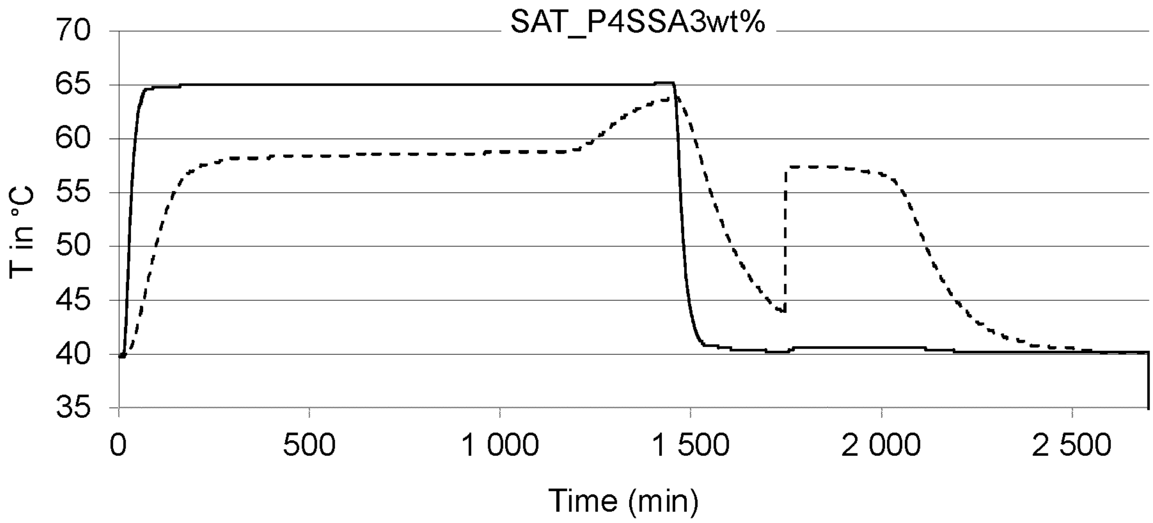
SAT_P4SSA3wt%
T in °C
70
65
60
55
50
45
40
35
0
500
1 000
1 500
2 000
2 500
Time (min)

Fig. 3B

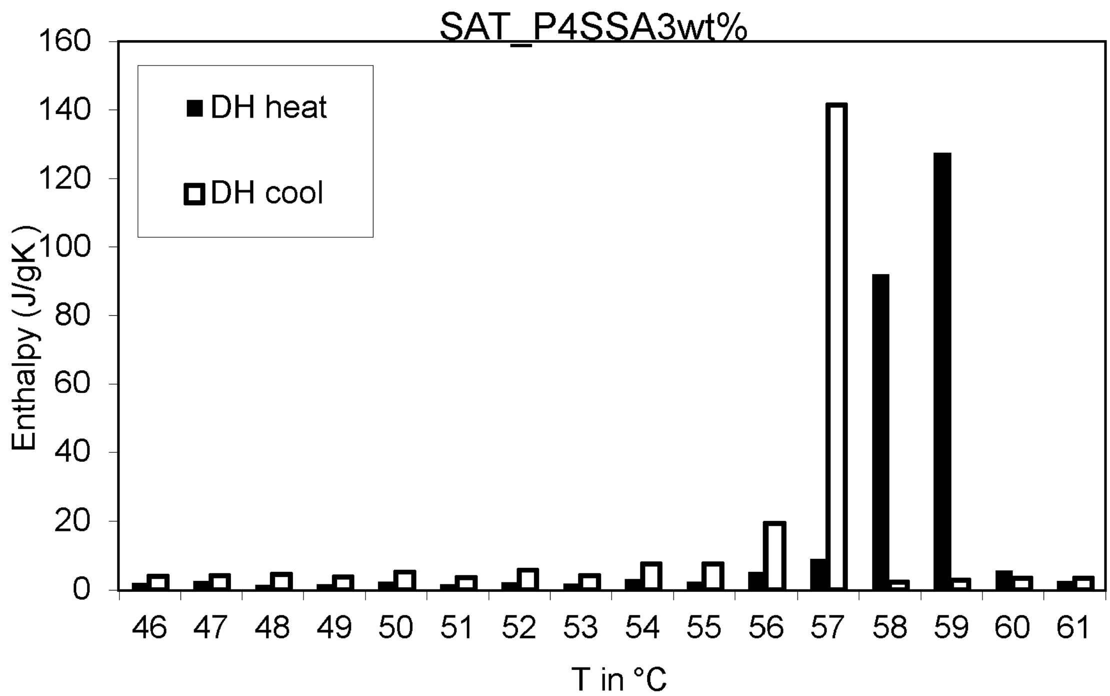
SAT_P4SSA3wt%
DH heat
DH cool
Enthalpy (J/gK)
160
140
120
100
80
60
40
20
0
46 47 48 49 50 51 52 53 54 55 56 57 58 59 60 61
T in °C

Fig. 3C

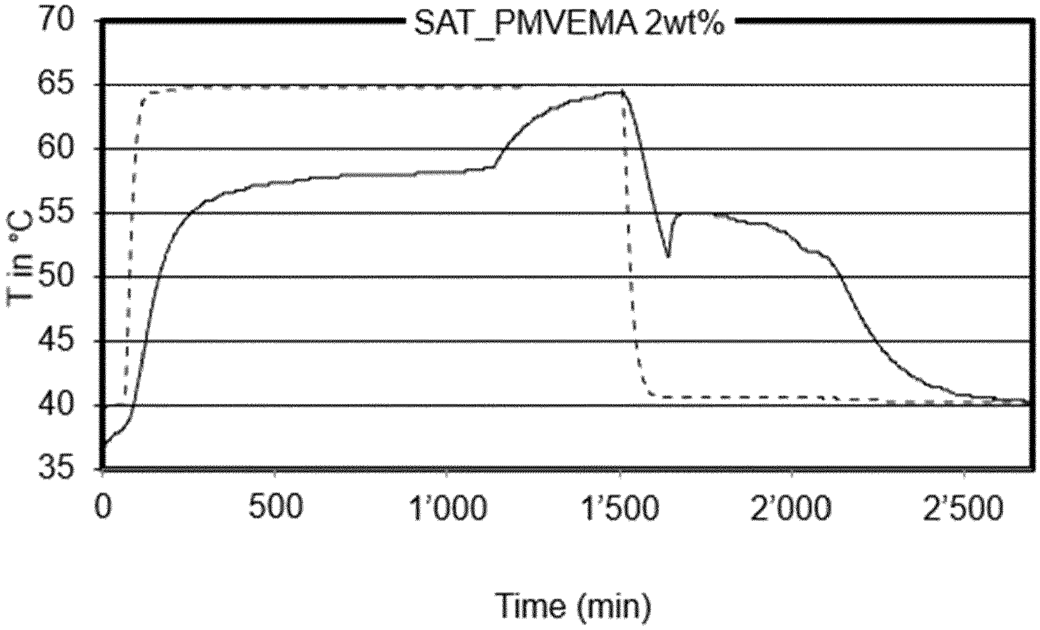
SAT_PMVEMA 2wt%
70
65
60
55
50
45
40
35
T in °C
0
500
1'000
1'500
2'000
2'500
Time (min)

Fig. 3D

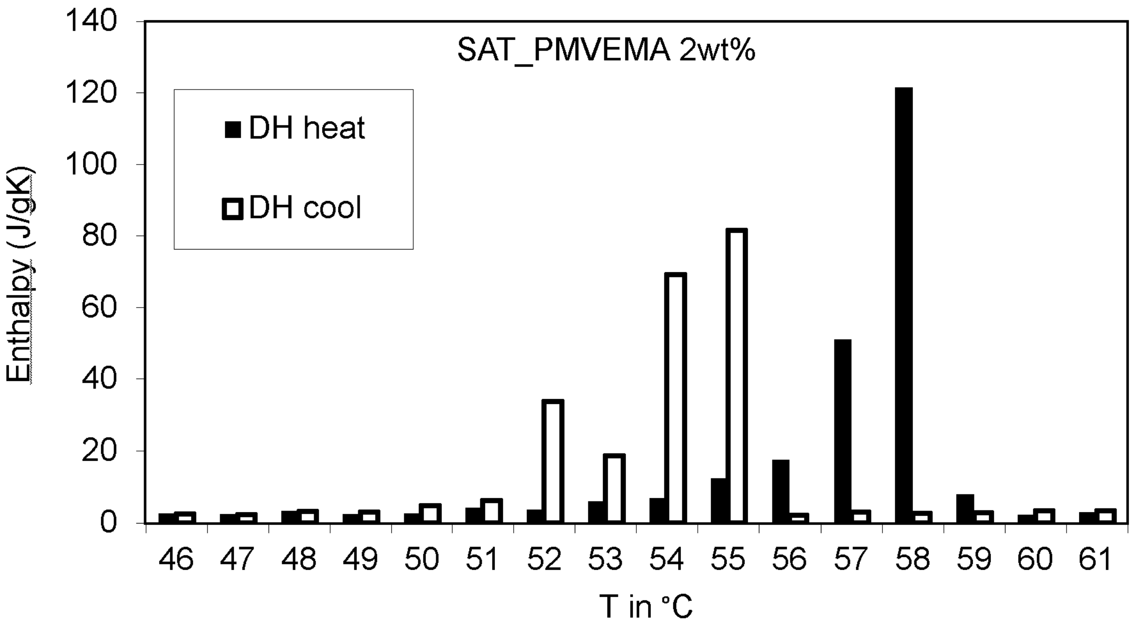
SAT_PMVEMA 2wt%
DH heat
DH cool
Enthalpy (J/gK)
140
120
100
80
60
40
20
0
46
47
48
49
50
51
52
53
54
55
56
57
58
59
60
61
T in °C

Fig. 3E

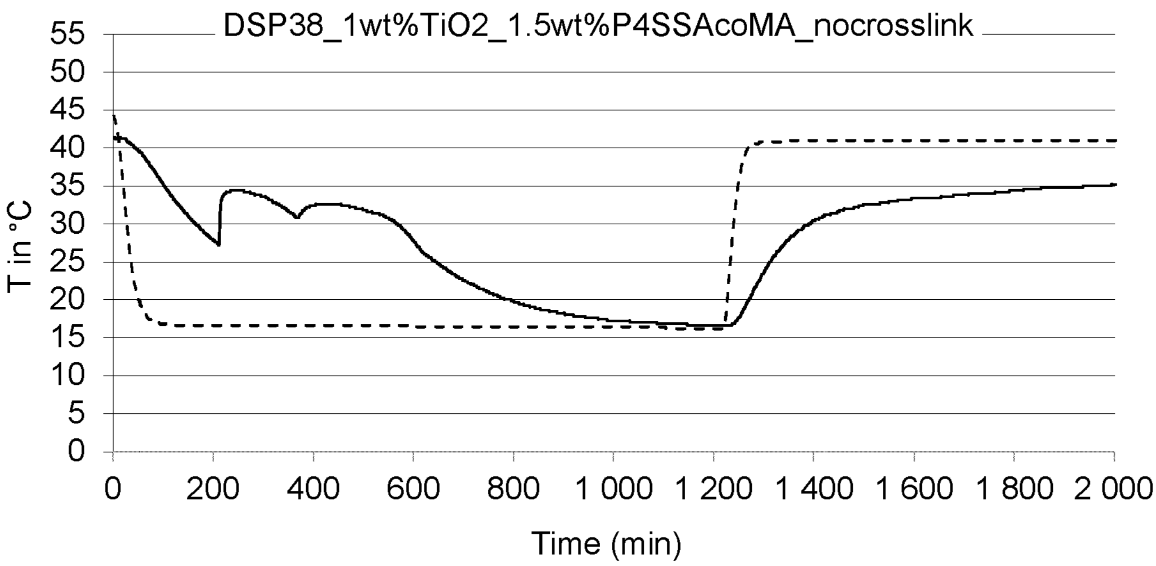
DSP38_1wt%TiO2_1.5wt%P4SSAcoMA_nocrosslink
T in °C
55
50
45
40
35
30
25
20
15
10
5
0
0
200
400
600
800
1 000
1 200
1 400
1 600
1 800
2 000
Time (min)

Fig. 3F

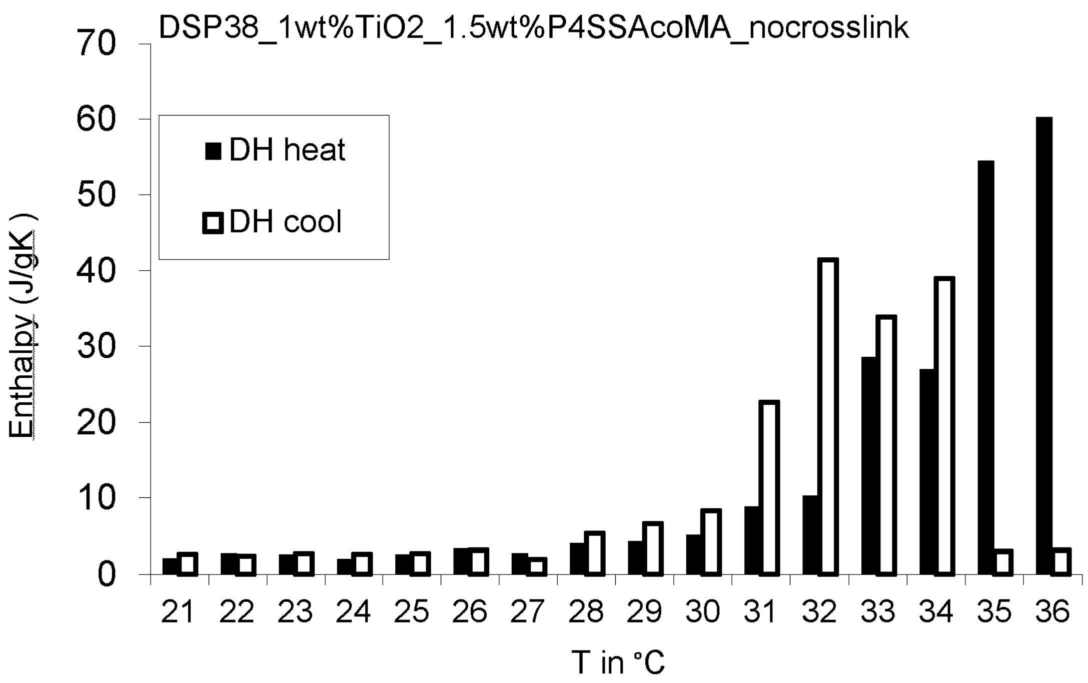
DSP38_1wt%TiO2_1.5wt%P4SSAcoMA_nocrosslink
Enthalpy (J/gK)
70
60
50
40
30
20
10
0
DH heat
DH cool
21
22
23
24
25
26
27
28
29
30
31
32
33
34
35
36
T in °C

Fig. 3G

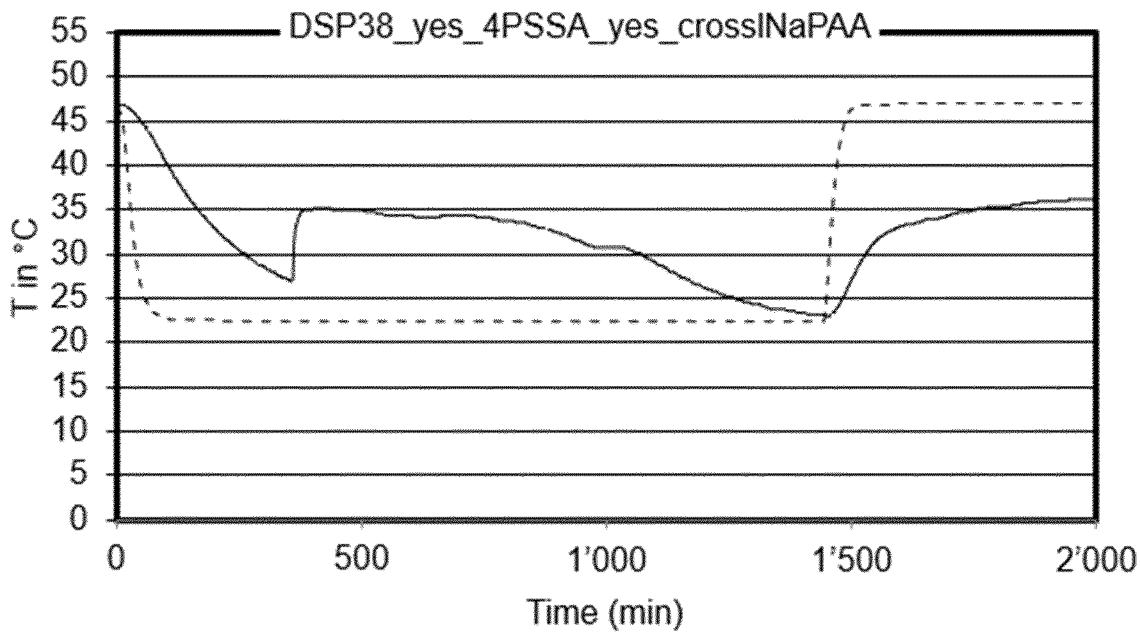
DSP38_yes_4PSSA_yes_crosslNaPAA
T in °C
0
5
10
15
20
25
30
35
40
45
50
55
0
500
1'000
1'500
2'000
Time (min)

Fig.3H

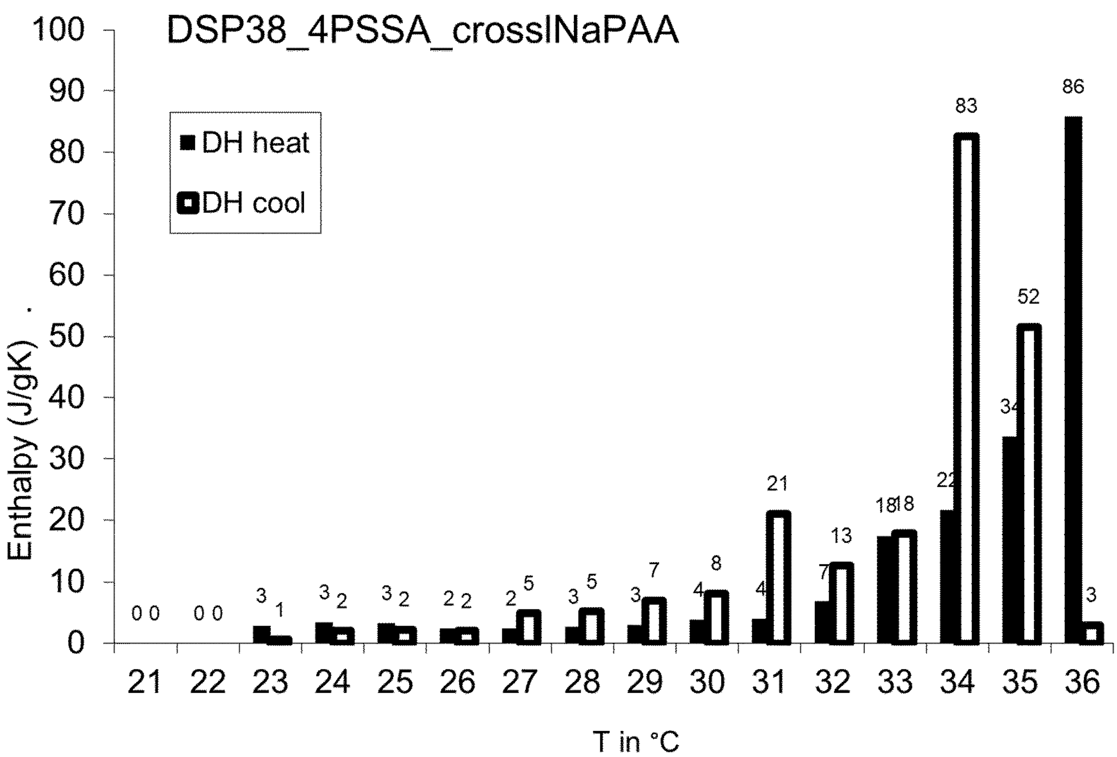
DSP38_4PSSA_crosslNaPAA
DH heat
DH cool
Enthalpy (J/gK)
0
10
20
30
40
50
60
70
80
90
100
T in °C
21
22
23
24
25
26
27
28
29
30
31
32
33
34
35
36
0 0
0 0
3 1
3 2
3 2
2 2
2 5
3 5
3 7
4 8
4 21
7 13
18 18
22 83
34 52
86 3

Fig. 4A

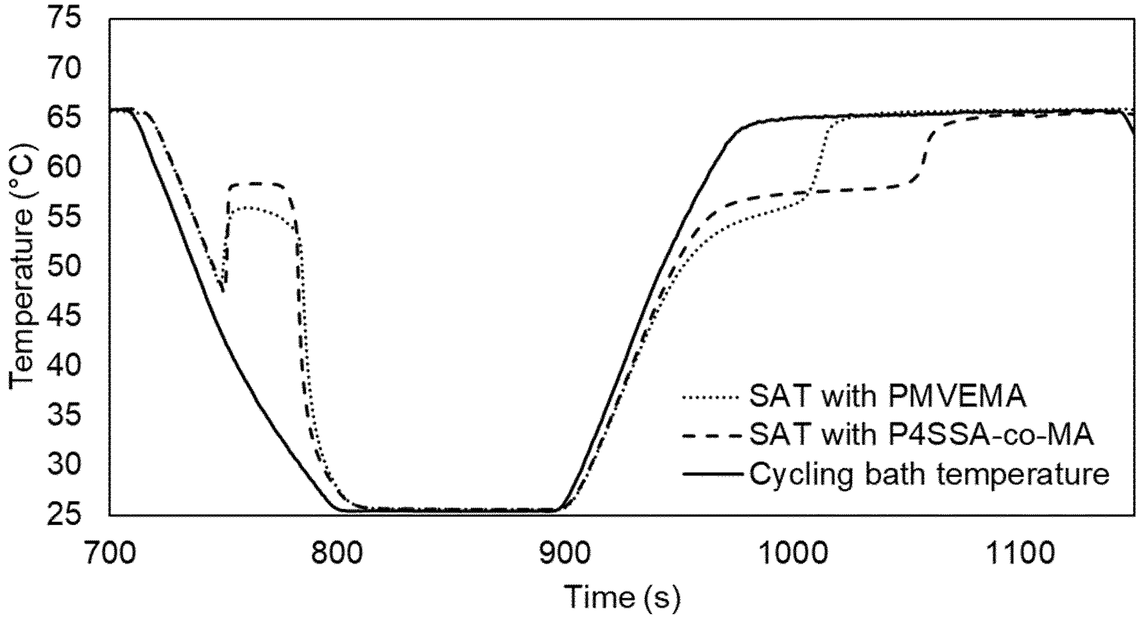
75
70
65
60
55
50
45
40
35
30
25
Temperature (°C)
700
800
900
1000
1100
Time (s)
SAT with PMVEMA
SAT with P4SSA-co-MA
Cycling bath temperature

Fig. 4B

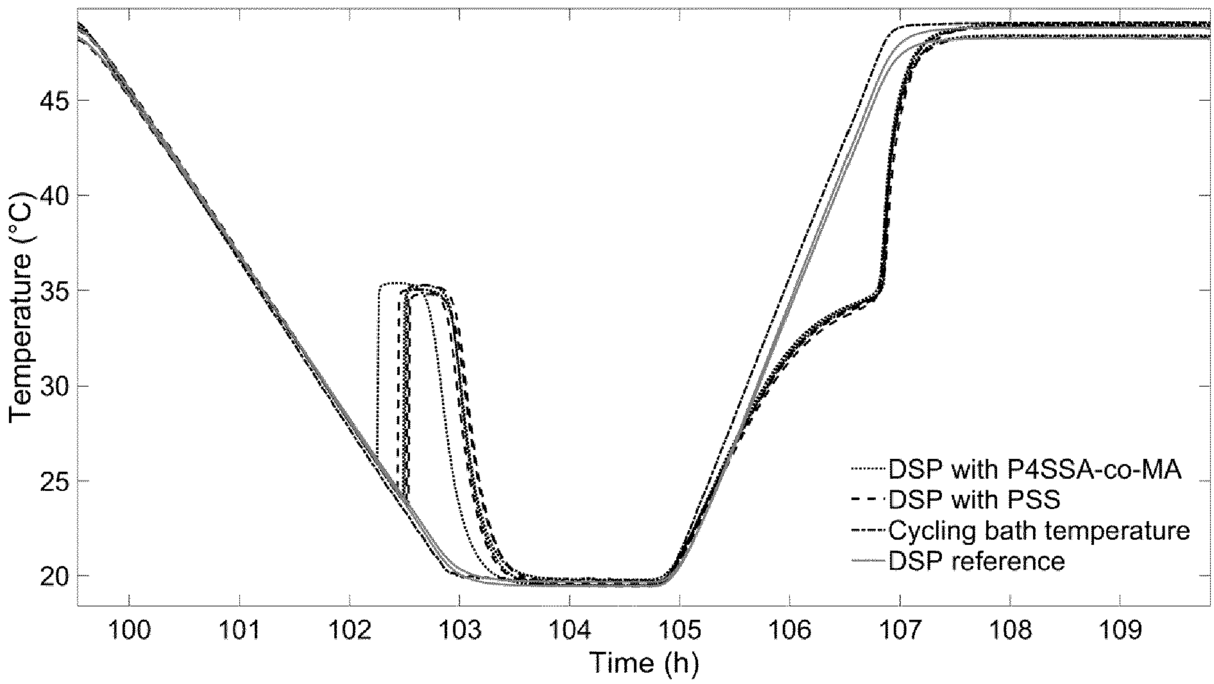
45
40
35
30
25
20
Temperature (°C)
100
101
102
103
104
105
106
107
108
109
Time (h)
DSP with P4SSA-co-MA
DSP with PSS
Cycling bath temperature
DSP reference

Fig. 5A

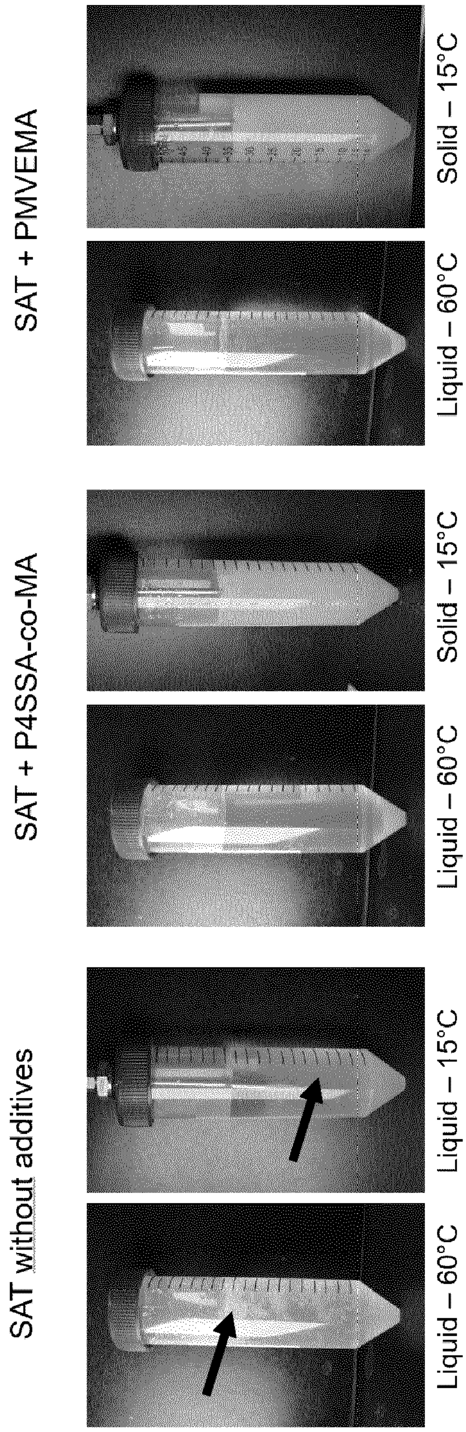
SAT + PMVEMA
Liquid – 60°C
Solid – 15°C
SAT + P4SSA-co-MA
Liquid – 60°C
Solid – 15°C
SAT without additives
Liquid – 60°C
Liquid – 15°C

Fig. 5B

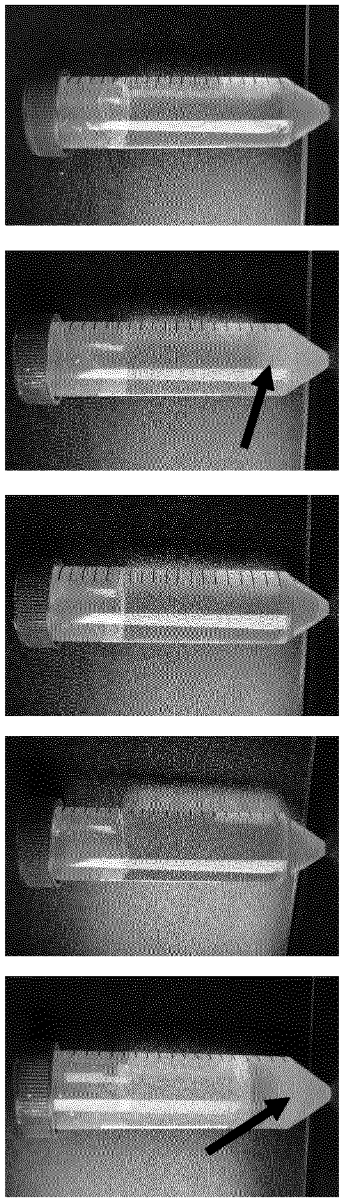

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014195961 A1
- WO 2014195691 A1


### Non-patent literature cited in the description


- *CHEMICAL ABSTRACTS*, 68037-40-1
- *CHEMICAL ABSTRACTS*, 7558-79-4
- *CHEMICAL ABSTRACTS*, 1317-80-2
- *CHEMICAL ABSTRACTS*, 1310-73-2
- *CHEMICAL ABSTRACTS*, 9003-04-7